# EUROPÄISCHE PATENTSCHRIFT

(11) **EP 1 386 809 B1**
(45) Veröffentlichungstag und Bekanntmachung des Hinweises auf die Patenterteilung: **06.10.2004**
(21) Anmeldenummer: 02017259.9
(22) Anmeldetag: 01.08.2002
(51) Int. Cl.: B60T 11/18

(54) **Geberzylinder**
Master cylinder
Maître-cylindre

(43) Veröffentlichungstag der Anmeldung: 04.02.2004
(73) Patentinhaber: ZF Sachs AG, 97424 Schweinfurt (DE)
(72) Erfinder: Gemeinhardt, André, 97508 Obereuerheim (DE); Koberstein, Ralf, 97797 Völkersleier (DE); Reuter, Klaus, 97723 Oberthulba (DE); Krappmann, Klaus, 97469 Gochsheim (DE)

(56) Entgegenhaltungen:
- GB-A- 407 148
- US-A- 4 650 363
- US-A- 5 163 773
- US-A- 5 794 512

## Beschreibung

Ein solcher Zylinder ist beispielsweise aus der DE 42 12 107 C2 bekannt und dient etwa der Betätigung einer hydraulischen Kupplung oder Bremse. Der Geberzylinder wird über das Brems- oder Kupplungspedal, welches mit der Kolbenstange des Zylinders in Verbindung steht, aktiviert. Der im Geberzylinder erzeugte hydraulische Druck wird über ein mit Hydraulikflüssigkeit befülltes Leitungssystem an einen Nehmerzylinder übertragen, welcher dort eine Verschiebung eines Arbeitskolbens bewirkt und damit beispielsweise einen Kupplungsausrücker betätigen kann.

Der in der DE 42 12 107 C2 offenbarte Geberzylinder weist eine Kolbeneinheit auf, wobei ein an der Kolbenstange endseitig angeordneter Kugelkopf durch eine der Kolbenstange gegenüberliegende Kugelschale und zwei radial zueinander angeordnete, den Kugelkopf halbkreisförmig hintergreifende Kugelschalensegmente umschlossen wird. Die Kugelschalensegmente weisen nach radial innen gerichtete Vorsprünge auf und greifen in eine Nut eines am Kolben in Richtung Druckraum ausgebildeten Kolbenhalses ein. Die Außenwandung des Kolbens wird, bis auf einen dem Druckraum zugewandten Kolbenkopf, durch eine Kolbehschafthülse gebildet, die die einzelnen Teile radial außen umschließt und zusammenhält.

Auf diese Weise sind Kolben und Kolbenstange formschlüssig und im wesentlichen spielfrei jedoch schwenkbeweglich miteinander verbunden.

Die beschriebene Kolbenkonstruktion ist aufgrund der Teilevielzahl sehr aufwendig. Insbesondere sind zur Lagerung des Kugelkopfes drei Stützelemente erforderlich, die mit einer hohen Präzision gefertigt und am Kolben montiert werden müssen. Weiterhin ist nachteilhaft, dass die Konstruktion eine nur begrenzte Steifigkeit aufweist und eine über die Kolbenstange eingeleitete Zugkraft ein radiales Auseinanderspreizen der Kugelschalensegmente zur Folge hat. Da diese unmittelbar an der relativ dünnwandigen Kolbenschafthülse anliegen, kann auch diese radial gedehnt werden, so dass dadurch letztendlich die Gleiteigenschaften des Kolbens im Zylinder negativ beeinflusst werden. Durch dieses Aufweiten der Kugelschalensegmente dehnt sich die Lagerung des Kugelkopfes im Laufe der Lebensdauer allmählich irreversibel aus, wodurch unerwünschte Spielzwischenräume auftreten können. Dazu ist es bekannt, dass beispielsweise ein Spiel von 1 Millimeter in einem Geberzylinder in Abhängigkeit von einer Hebelübersetzung einen Totweg von etwa 5-6 Millimeter am Kupplungspedal verursachen kann.

Ein weiterer Geberzylinder mit einem Kolben und einer schwenkbeweglich darin angeordneten Kolbenstange geht aus der DE 195 23 215 A1 hervor, bei der eine mit einem Boden ausgebildete Kolbenschafthülse zwei Halteschalen für den Kugelkopf der Kolbenstange aufnimmt. Die Halteschalen sind radial zueinander angeordnet und weisen an der dem Kolbenboden abgewandten Seite halbrundartig geformte Ausnehmungen auf, welche den Kugelkopf formschlüssig halten. Die Halteschalen sind außerdem stirnseitig mit Schlitzen versehen, wodurch mehrere, die Kugel hintergreifende, schwenkbewegliche Segmente gebildet werden. Die Segmente weisen endseitig nach radial innen gerichtete Schnappnasen auf, die von einer Freistellung umgeben sind. Beim Einschnappen des Kugelkopfes in dessen Lagerstelle führen die Segmente eine radiale Ausweichbewegung in Richtung der Freistellung aus. Gegen ein ungewolltes Verlagern des Kugelkopfes sind die Schnappnasen an der zur Kugel gerichteten Seite mit einem scharfkantigen Übergang, an dem ein Hinterschnitt ausgebildet ist, versehen.

Diese Konstruktion weist ebenfalls den Nachteil auf, dass bei einer wechselnden Druck-/Zugbelastung der Kolbenstange ein Totweg durch Spielzwischenräume auftreten kann. Insbesondere bei einer Zugbelastung kann der an der Kolbenstange angrenzende Bereich des Kugelkopfes als Anlaufschräge für die Segmente dienen, welche dann trotz ihrer scharfkantigen Schnappnasen nach radial außen ausweichen können.

Mit der GB 407 148 A ist ein Kolben eines Verbrennungsmotors bekannt geworden, wobei ein an einer Kolbenstange angeordneter Kugelkopf von einer axial bezüglich des Kolbens in zwei Halbschalen geteilten Kugelpfanne aufgenommen wird. Dabei weist gemäß einer Ausführungsform die die Kolbenstange umgreifende Kugelschale ein Außengewinde auf, welches zur Bildung eines geschlossenen Kugelgelenks mit einem Innengewinde eines am Kolben vorgesehenen Rohransatzes zusammenwirkt. Gemäß einer weiteren Ausführungsform ist die genannte Kugelschale separat von einer diese umschließende Hülsenmutter ausgeführt, wobei letztere wiederum im Kolben verschraubt wird und dabei die beiden Kugelschalen zusammengepresst werden. Dieser Kolben weist den Nachteil auf, dass die bei der Herstellung der Schraubverbindung und während des Betreibens des Kolbens wirkenden Zugkräfte auf den Außenmantel des Kolbens, d.h. auf dessen Lauffläche übertragen werden können.

Der Erfindung liegt somit die Aufgabe zugrunde, die Kolbeneinheit eines Geberzylinders so zu verbessern, dass ein mit einer Kolbenstange verbundener Kugelkopf zuverlässig spielfrei gelagert wird und bei der Betätigung des Zylinders die am Kolben auftretenden Druck- und Zugkräfte verlustfrei an das hydraulische System weitergeleitet werden können, ohne den Kolben der Gefahr einer Verformung auszusetzen.

Die vorstehend genannte Aufgabe wird gelöst durch die im Kennzeichen des Patentanspruches 1 angegebenen Merkmale. Vorteilhafte Weiterbildungen und Ausgestaltungen der Erfindung sind in den Unteransprüchen angegeben.

Dadurch, dass das Fangelement den Kugelschichtring im montierten Zustand umschließt, können auftretende Radialkräfte von diesem vollständig abgefangen und nicht auf die Kolbenschafthülse übertragen werden. Die Erzeugung eines axialen Spielzwischenraumes zwischen dem Kugelkopf und dessen Lagerstelle wird dadurch sicher unterbunden. Die Stützelemente, das Fangelement und die Kolbenstange können vor dem Einfügen in die Kolbenschafthülse als Einheit vormontiert und somit die sichere Funktion des Kugelgelenkes vorab sichergestellt werden.

Gemäß der Ausgestaltung nach Anspruch 2 kann sich das erste Stützelement axial an dem Kolbenboden abstützen, wodurch zusätzliche Verankerungs- oder Abstützstellen erübrigt werden.

Der Kugelschichtring ist vorteilhafter Weise an einer Stützhülse ausgebildet, durch welche die Kolbenstange geführt ist.

Die Ausgestaltung der Erfindung nach Anspruch 4 sieht vor, die Stützhülse in einem Endbereich der Kolbenschafthülse durch eine Rastverbindung oder einen an der Kolbenschafthülse ausgebildeten Bund axial zu sichern.

Die Ausbildung einer Anlagefläche für die Kolbenstange erfolgt gemäß Anspruch 5 unmittelbar an der Stützhülse.

In einer weiteren vorteilhaften Ausgestaltung der Erfindung nach Anspruch 6 weist die Stützhülse im Bereich des Kugelschichtringes mindestens einen Axialschlitz auf, wobei dieser Bereich von einem als Fangring ausgebildeten Fangelement umschlossen ist. Diese Variante ermöglicht auch die Montage von Kolbenstangen, an deren beiden Endseiten ein Kugelkopf bzw. ein Montageelement mit einen den Innendurchmesser des Kugelschichtringes übersteigenden Maß, angeordnet ist.

Es ist nach Anspruch 7 insbesondere zur Erzielung einer hohen Formgenauigkeit der Kugelpfanne ebenfalls günstig, wenn die sich gegenüberliegenden Bereiche des Stützkörpers und der Stützhülse von einem gemeinsamen Fangring umschlossen sind.

Mit besonderem Vorteil schlägt die Erfindung mit Anspruch 8 vor, zwischen dem Fangring und dem Stützkörper und/oder dem Fangring und der Stützhülse eine Rastverbindung auszubilden.

Nach Anspruch 9 kann sogar bei einer geschlitzten Stützhülse ein separater Fangring unterbleiben, wenn der Stützkörper im Bereich der Halbkugelschale einen Ringsteg aufweist, der die Stützhülse im Bereich des Kugelschichtringes aufnimmt.

Gemäß Anspruch 10 bilden der Stützkörper und die Stützhülse ein Stützgerüst für die Kolbenschafthülse. Hierdurch eröffnet sich die Möglichkeit, die Kolbenschafthülse noch dünnwandiger als bisher bekannt, also mit einer Materialstärke von weniger als einem Millimeter, z.B. 0,5 - 0,7 Millimeter auszubilden.

Anspruch 11 sieht schließlich vor, die Kolbenschafthülse als dünnwandiges Tiefziehteil aus einem metallischen Werkstoff zu formen.

Die Erfindung wird anhand eines Ausführungsbeispiels mit Bezug auf die anliegende Zeichnung näher erläutert. In den Figuren sind übereinstimmende Bauteile mit gleichen Bezugsziffern versehen. Es zeigen:
- Figur 1: eine Schnittdarstellung eines Geberzylinders eines hydraulischen Kupplungssystems;
- Figur 2a: einen Axialschnitt durch eine Kolbeneinheit gemäß der vorliegenden Erfindung;
- Figur 2b: eine Schnittdarstellung einer geschlitzten Stützhülse;
- Figur 2c: eine mittels Rastverbindungen vormontierte Baueinheit einer Kolbeneinheit;
- Figur 3: ein weiteres Ausführungsbeispiel einer Kolbeneinheit.

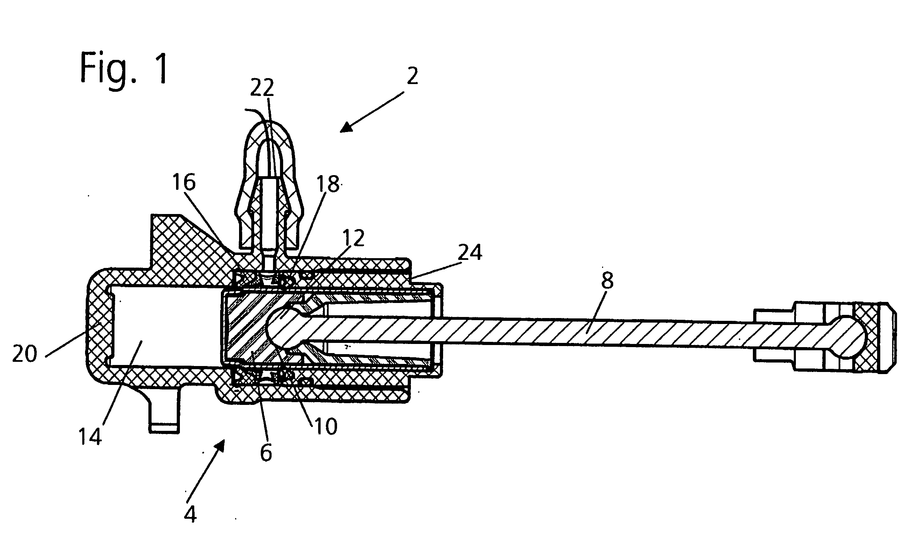

Figur 1 zeigt zunächst zum allgemeinen Verständnis der Erfindung einen montierten Geberzylinder 2 eines hydraulischen Kupplungsbetätigungssystems eines Kraftfahrzeuges, welcher im Wesentlichen aus einem zylinderförmigen Gehäuse 4 und einen darin axialbeweglichen Kolben 6 besteht, der von einer mit einem Pedal in Wirkverbindung stehenden Kolbenstange 8 angesteuert wird. Die Verbindung zwischen der Kolbenstange 8 und dem Kolben 6 ist üblicherweise durch ein Kugelgelenk 10 realisiert, welches einen mit der Kolbenstange 8 verbundenen Kugelkopf 12 zumindest teilweise umschließt und eine gegenseitige Verschwenkbewegung des Kolbens 6 zur Kolbenstange 8 ermöglicht. Die Stirnseite des Kolbens 6 und die Innenwandung des Gehäuses 4 definieren einen Druckraum 14, der gegenüber dem beweglichen Kolben 6 mit zwei voneinander axial beabstandeten ringförmigen Lippendichtungen 16, 18 abgedichtet ist. Das Gehäuse 4 ist zweiteilig ausgeführt und weist ein vorderes Gehäuseteil 20 mit einer seitlichen Anschlußöffnung 22 auf, die mit einem nicht dargestellten Vorratsbehälter einer Hydraulikflüssigkeit in Verbindung steht und weist weiterhin eine ebenfalls zeichnerisch nicht dargestellte Anschlußöffung für eine Strömungsverbindung zu einem Nehmerzylinder auf. Das Gehäuseteil 20 weist an der offenen Seite etwa über dessen halbe Länge eine zylindrische Ausnehmung auf, die die Dichtungsanordnung 16, 18 und ein hinteres als Führungshülse gestaltetes Gehäuseteil 24 aufnimmt. Der Innendurchmesser des vorderen Abschnittes des vorderen Gehäuseteils 20 und der des hinteren Gehäuseteils 24 sind identisch, so dass der Kolben 6 von beiden Gehäuseteilen 20, 24 geführt wird, welche durch eine bekannte, nicht dargestellte Schnappverbindung gegenseitig gesichert sind.

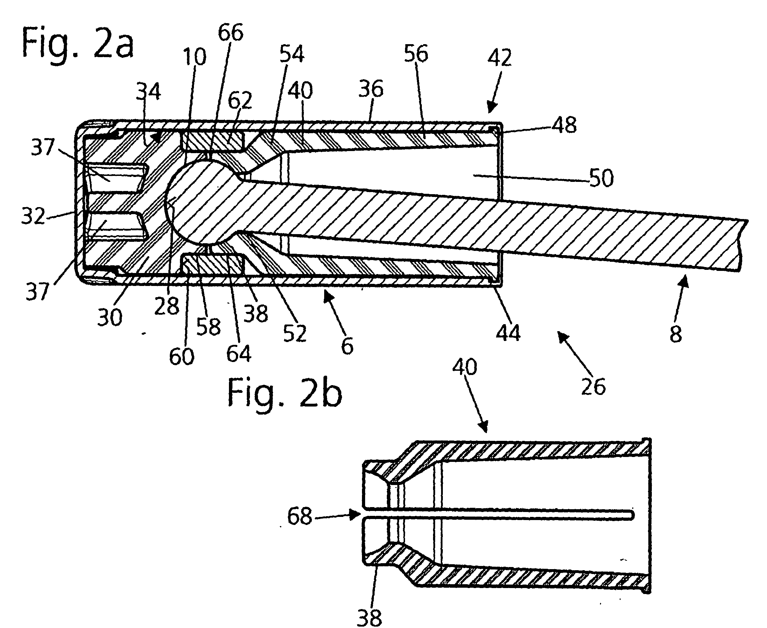

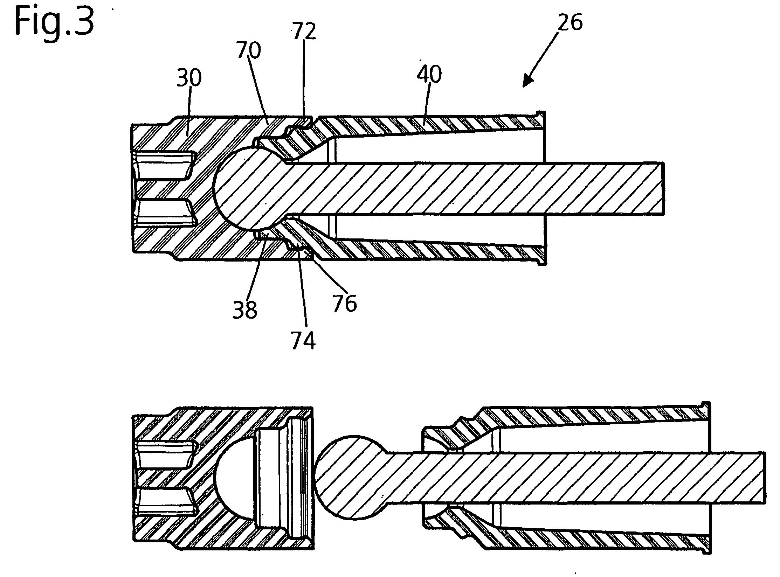

Im Folgenden soll anhand der Figuren 2a-c und 3 der Aufbau der durch den Kolben 6 und die Kolbenstange 8 gebildeten Kolbeneinheit 26 detailliert beschrieben werden. Gemäß der Erfindung wird in Figur 2a der Kugelkopf 12 der Kolbenstange 8 auf der dieser abgewandten Halbseite etwa vollständig von einem eine Halbkugelschale 28 aufweisenden erstem Stützelement 30 umschlossen. Die Halbkugelschale 28 ist als Ausnehmung eines im Wesentlichen zylindrischen, aus einem Kunststoff spritzgegossenen Stützkörpers 30 geformt, der sich axial an einem Boden 32 und radial an der Innenmantelfläche 34 der Kolbenschafthülse 36 abstützt und sich vom Boden 32 ausgehend bis etwa zur Mitte des Kugelkopfes 12 erstreckt. Im Bereich des Bodens 32 weist der Stützkörper 30 zur Vermeidung einer Masseanhäufung mehrere Ausnehmungen 37 auf.

Auf der dem Stützkörper 30 gegenüberliegenden Seite des Kugelkopfes 12 ist ein ebenfalls als Kunststoffspritzgußteil hergestellter Kugelschichtring 38 angeordnet, welcher den Kugelkopf 12 auf dieser Seite fast vollständig, bis auf einen zum Verschwenken der Kolbenstange 8 beanspruchten Freiraum bzw. Verschwenkspielraum umschließt. Der Kugelschichtring 38 ist als Endteil einer Stützhülse 40 ausgebildet, die ein zweites Stützelement 40 darstellt, welche sich etwa von der Kugelkopfmitte bis in den axialen Endbereich 42 der Kolbenschafthülse 36 erstreckt und sich dort mittels einer Formschlussverbindung 44 gegen eine axiale Bewegung in der Kolbenschafthülse 36 abstützt. Dazu ist an der Stützhülse 40 eine Ringkragen 48 ausgebildet, der durch Verrollen der Kolbenschafthülse 36 fest umschlossen wird. Die Formschlussverbindung 44 ist somit außerhalb des Wirkungsbereiches des Kugelgelenkes 10 angeordnet. Dadurch werden selbst extreme stoßartige Belastungen des Kugelgelenkes 10 von der Formschlussverbindung 44 ferngehalten und ein Lösen der Formschlussverbindung 44 sicher unterbunden. Die Kolbenstange 8 ist durch eine Zentralausnehmung 50 des Kugelschichtringes 38 bzw. der Stützhülse 40 hindurchgeführt und kann sich an eine den Schwenkbereich der Kolbenstange 8 begrenzenden ringförmige Anlagefläche 52, die unmittelbar an den Kugelschichtring 38 angrenzt am Innendurchmesser der Stützhülse 40 anlegen. Von dem Kugelkopf 12 aus betrachtet, weist die Stützhülse 40 weiterhin einen sich trichterförmig erweiternden Abschnitt 54 auf, welcher in einen etwa 80 % der Gesamtlänge einnehmenden zylinderförmigen an der Kolbenschafthülse 36 anliegenden Abschnitt 56 übergeht. Für den Fall, dass die zu montierende Kolbenstange 8 an beiden Enden einen Kugelkopf 12 oder ein anderes Befestigungselement aufweist, deren Durchmesser größer sind als der Innendurchmesser des Kugelschichtringes 38, sind, wie in Fig. 2b gezeigt, an der Stützhülse 40 ein oder mehrere Axialschlitze 68, die sich vom Kugelschichtring 38 aus erstrecken, ausgeführt so dass sich ein Kugelkopf 12 durch eine kurzzeitige elastische Dehnung der Stützhülse 40 ebenfalls leicht montieren lässt. Im Bereich des Kugelkopfes 12, wo sich der Stützkörper 30 und die Kolbenschafthülse 36 benachbart gegenüberliegen, weist der Stützkörper 30 eine Durchmesserabstufung mit einer äußeren Mantelfläche 58 und einer axialen Anlagefläche 60 auf, auf die ein Fangring 62 aus Kunststoff- oder Metall aufgeschoben ist, welcher zugleich auch den mit dem gleichen Durchmesser ausgeführten Außenmantel 64 des Kugelschichtringes 38 und einen möglicherweise zwischen dem Stützkörper 30 und der Stützhülse 40 zum Ausgleich von Fertigungstoleranzen vorgesehenen Axialspalt 66 umschließt. Durch diese Ausgestaltung können insbesondere die bei einer Zugbelastung am Kugelgelenk 10 auftretenden Kräfte, welche eine Aufweitung des Kugelschichtringes 38 zur Folge haben können abgefangen und eine Weiterleitung auf die und eine Verformung der relativ dünnwandigen Kolbenschafthülse 36 abgewandt werden. Selbstverständlich ist es auch möglich, den Fangring 62 ausschließlich am Kugelschichtring 64 anzuordnen, da bei dem Stützkörper 30 die Gefahr einer radialen Aufweitung nicht vorliegt. Wenn die Kolbenstange 8 ein freies Ende aufweist, dessen Außendurchmesser kleiner ist als der Innendurchmesser des Kugelschichtringes 38, so kann selbstverständlich der Kugelschichtring 38 ohne Axialschlitze ausgeführt und beispielsweise bis an die Kolbenschafthülse 36 im Durchmesser erweitert werden, wobei auf einen Fangring 62 ersatzlos verzichtet werden kann.

Beim Zusammenbau der Kolbeneinheit 26 wird zunächst der Stützkörper 30 in die Kolbenschafthülse 36 bis zum Boden 32 eingesteckt. Dann wird die Kolbenstange 8 mit der dem Kugelkopf 12 abgewandten Seite durch die Zentralöffnung 50 des Kugelschichtringes 38 bzw. der Stützhülse 40 geführt und dann gegebenenfalls der Fangring 62 auf den Kugelschichtring 38 aufgesteckt. Die dadurch erzeugte Baueinheit wird ebenfalls in die Kolbenschafthülse 36 eingesteckt, deren Endbereich 42 anschließend verrollt wird und die Kolbeneinheit 26 gegen eine unbeabsichtigte Demontage sichert.

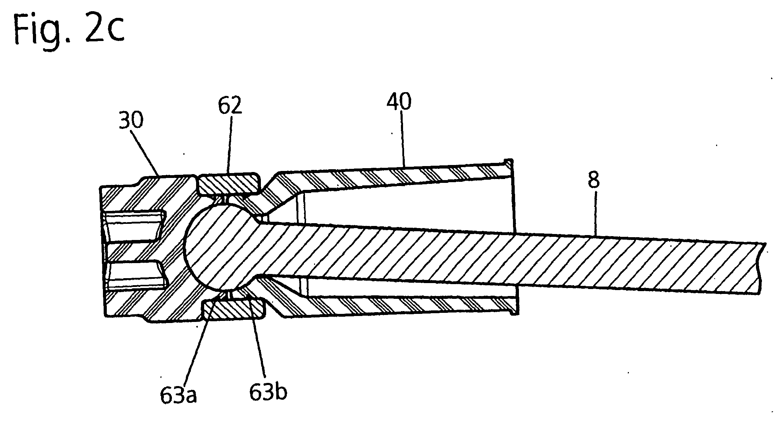

Wie in Figur 2c beispielhaft dargestellt, können auch zwischen dem Fangring 62 und dem Stützkörper 30 und/oder dem Fangring 62 und der Stützhülse 40 Rastverbindungen 63a, 63b ausgebildet sein. Bei dieser Ausführung können alle in der Kolbenschafthülse 36 angeordneten Teile vormontiert und dann als Baueinheit in diese eingebracht werden.

Alternativ kann eine selbstsichernde Verbindung auch unmittelbar zwischen dem Stützkörper 30 und der Stützhülse 40 ohne das Vorsehen eines Fangringes 62 erfolgen. Dazu ist in Fig. 3 eine weitere Kolbeneinheit 26 dargestellt, die sich von dem vorgenannten Beispiel darin unterscheidet, dass der Stützkörper 30 radial außen einen Ringsteg 70 aufweist, der die in Abhängigkeit von der zur Montage vorgesehenen Kolbenstange gegebenenfalls mit Axialschlitzen 68 ausgeführte Stützhülse 40 im Bereich des Kugelschichtringes 38 aufnimmt und die Stützhülse 40 gegen ein radiales Aufweiten sichert. An dem Ringsteg 70 schließt sich ein weiterer ringförmiger Fortsatz 72 mit einem erweiterten Innendurchmesser an, der einen umlaufenden nach radial innen gerichteten Rastvorsprung 74 trägt, welcher mit einem dazu korrespondierenden ebenfalls ringförmigen an der Stützhülse 40 radial außen ausgebildeten Rastvorsprung 76 zusammenwirkt. Ein zusätzlicher Fangring 62 erübrigt sich somit. In Abwandlung der Fig. 3 sind in dem Kolben 6 der Fig. 1 der Stützkörper 30 und die Stützhülse 40 ohne Rastmittel ausgebildet.

Wie bereits erwähnt, kann die Kolbenschafthülse 36 als dünnwandiges Tiefziehteil aus einem metallischen Werkstoff mit einer Wandstärke von etwa einem Millimeter oder geringer, beispielsweise 0,5 bis 0,7 Millimeter geformt werden. Dieses wird auch dadurch möglich, weil durch die Anordnung von Stützkörper 30 und Stützhülse 40 und gegebenenfalls des Fangringes 62 die Festigkeit des Kolbens 6 beträchtlich erhöht wird und diese Elemente somit ein Stützgerüst für die Kolbenschafthülse 36 bilden.

### Liste der verwendeten Bezugszeichen

- 2: Geberzylinder
- 4: Gehäuse
- 6: Kolben
- 8: Kolbenstange
- 10: Kugelgelenk
- 12: Kugelkopf
- 14: Druckraum
- 16, 18: Lippendichtung
- 20: vorderes Gehäuseteil
- 22: seitliche Anschlussöffnung
- 24: hinteres Gehäuseteil
- 26: Kolbeneinheit
- 28: Halbkugelschale
- 30: erstes Stützelement, Stützkörper
- 32: Boden
- 34: Innenmantelfläche
- 36: Kolbenschafthülse
- 37: Ausnehmung
- 38: Kugelschichtring
- 40: zweites Stützelement, Stützhülse
- 42: Endbereich
- 44: Formschlussverbindung
- 48: Ringkragen
- 50: Zentralausnehmung
- 52: Anlagefläche
- 54: trichterförmiger Abschnitt
- 56: zylinderförmiger Abschnitt
- 58: Mantelfläche
- 60: Anlagefläche
- 62: Fangring
- 63a, 63b: Rastverbindung
- 64: Außenmantel
- 66: Axialspalt
- 68: Axialschlitz
- 70: Ringsteg
- 72: ringförmiger Fortsatz
- 74, 76: Rastvorsprung

## Patentansprüche

1. Zylinder (2), insbesondere Geberzylinder für hydraulisch betätigte Kupplungs- oder Bremssysteme an Kraftfahrzeugen, mit
- einem in einem Gehäuse (4) angeordneten Kolben (6),
- der über eine Kolbenstange (8) axial verschiebbar ist,
- wobei die Kolbenstange (8) einen Kugelkopf (12) aufweist, der durch schalenförmige, eine Kugelpfanne bildende Stützelemente (30, 40), zumindest bereichsweise umschlossen und in diesen gelagert ist, so dass der Kolben (6) und die Kolbenstange (8) im wesentlichen spielfrei jedoch gegeneinander verschwenkbar miteinander verbunden sind und wobei die Stützelemente (30, 40) zumindest teilweise innerhalb einer Kolbenschafthülse (36) angeordnet sind, an der sich diese gegen eine über die Kolbenstange (8) eingeleitete Kraft abstützen können, wobei
ein erstes Stützelement (30) eine Halbkugelschale (28) aufweist und damit eine Halbseite des Kugelkopfes (12) umschließt und dass die andere Seite des Kugelkopfes (12) bis auf einen Verschwenkspielraum von einem einen Kugelschichtring (38) aufweisenden zweiten Stützelement (40) umschlossen wird, durch dessen Öffnung (50) die Kolbenstange (8) geführt ist, **dadurch gekennzeichnet, dass** dem Kugelschichtring (38) ein Fangelement (62, 70) zugeordnet ist, welches bei einer Zugbelastung der Kolbenstange (8) eine Radialkraft aufnehmen kann und eine Übertragung dieser Kraft auf die Kolbenschafthülse (36) unterbindet und wobei das Fangelement (62, 70), die Stützelemente (30, 40) und die Kolbenstange (8) vor dem Einfügen in die Kolbenschafthülse (36) als Einheit vormontiert werden können.

2. Zylinder nach Anspruch 1, wobei die Kolbenschafthülse (36) einen Kolbenboden (32) aufweist,
**dadurch gekennzeichnet, dass** sich das erste Stützelement (30) axial an dem Kolbenboden (32) abstützt.

3. Zylinder nach Anspruch 1 oder 2,
**dadurch gekennzeichnet, dass** der Kugelschichtring (38) an einer Stützhülse (40) ausgebildet ist.

4. Zylinder nach einem der Ansprüche 1 bis 3,
**dadurch gekennzeichnet, dass** die Stützhülse (40) in einem Endbereich (42) der Kolbenschafthülse (36) durch eine Rastverbindung (44) oder einen an der Kolbenschafthülse (36) ausgebildeten Bund axial gesichert ist.

5. Zylinder nach einem der Ansprüche 3 oder 4,
**dadurch gekennzeichnet, dass** die Stützhülse (40) eine Anlagefläche (52) für die Kolbenstange (8) aufweist.

6. Zylinder nach einem der Ansprüche 3 bis 5,
**dadurch gekennzeichnet,**
**dass** die Stützhülse (40) im Bereich des Kugelschichtringes (38) mindestens einen Axialschlitz (68) aufweist und dieser Bereich zumindest teilweise von einem als Fangring (62) ausgebildeten Fangelement umschlossen ist.

7. Zylinder nach Anspruch 6,
**dadurch gekennzeichnet, dass** die sich gegenüberliegenden Bereiche des Stützkörpers (30) und der Stützhülse (40) von einem gemeinsamen Fangring (62) umschlossen sind.

8. Zylinder nach Anspruch 6 oder 7,
**dadurch gekennzeichnet, dass** zwischen dem Fangring (62) und dem Stützkörper (30) und/oder dem Fangring (62) und der Stützhülse (40) eine Rastverbindung (63a, 63b) ausgebildet ist.

9. Zylinder nach einem der Ansprüche 3 bis 5,
**dadurch gekennzeichnet, dass** der Stützkörper (30) im Bereich der Halbkugelschale (28) einen Ringsteg (70) aufweist, der die Stützhülse (40) im Bereich des Kugelschichtringes (38) aufnimmt.

10. Zylinder nach einem der Ansprüche 1 bis 9,
**dadurch gekennzeichnet, dass** der Stützkörper (30) und die Stützhülse (40) ein Stützgerüst für die Kolbenschafthülse (36) bilden.

11. Zylinder nach einem der Ansprüche 1 bis 10,
**dadurch gekennzeichnet, dass** die Kolbenschafthülse (36) als dünnwandiges Tiefziehteil aus einem metallischen Werkstoff geformt ist.

## Claims

1. Cylinder (2), in particular master cylinder for hydraulically actuated clutch or brake systems in motor vehicles, having
- a piston (6) arranged in a housing (4)
- which is axially displaceable by means of a piston rod (8),
- the piston rod (8) having a spherical head (12) which is enclosed, at least in certain regions, by shell-like supporting elements (30, 40) which form a ball socket and is mounted in the latter, with the result that the piston (6) and the piston rod (8) are connected to one another with substantially no play but are pivotable against one another, and the supporting elements (30, 40) being arranged at least partially within a piston skirt sleeve (36) on which it is possible for the said supporting elements (30, 40) to be supported counter to a force introduced via the piston rod (8),
a first supporting element (30) having a hemispherical shell (28) and therefore enclosing half a side of the spherical head (12) and the other side of the spherical head (12) being enclosed, with the exception of a pivoting clearance, by a second supporting element (40) having a spherical segment ring (38), through the opening (50) of which second supporting element (40) the piston rod (8) is guided, **characterized in that** the spherical segment ring (38) is assigned a catching element (62, 70) which can absorb a radial force in the case of tensile loading of the piston rod (8) and suppresses transmission of this force to the piston skirt sleeve (36), and it being possible for the catching element (62, 70), the supporting elements (30, 40) and the piston rod (8) to be preassembled as a unit before insertion into the piston skirt sleeve (36).

2. Cylinder according to Claim 1, the piston skirt sleeve (36) having a piston base (32), **characterized in that** the first supporting element (30) is supported axially on the piston base (32).

3. Cylinder according to Claim 1 or 2, **characterized in that** the spherical segment ring (38) is formed on a supporting sleeve (40).

4. Cylinder according to one of Claims 1 to 3, **characterized in that** the supporting sleeve (40) is axially secured in an end region (42) of the piston skirt sleeve (36) by a latching connection (44) or a collar formed on the piston skirt sleeve (36).

5. Cylinder according to either of Claims 3 and 4, **characterized in that** the supporting sleeve (40) has a contact surface (52) for the piston rod (8).

6. Cylinder according to one of Claims 3 to 5, **characterized in that** the supporting sleeve (40) has at least one axial slot (68) in the region of the spherical segment ring (38) and this region is at least partially enclosed by a catching element configured as a catching ring (62).

7. Cylinder according to Claim 6, **characterized in that** the regions lying opposite one another of the supporting body (30) and of the supporting sleeve (40) are enclosed by a common catching ring (62).

8. Cylinder according to Claim 6 or 7, **characterized in that** a latching connection (63a, 63b) is formed between the catching ring (62) and the supporting body (30), and/or the catching ring (62) and the supporting sleeve (40).

9. Cylinder according to one of Claims 3 to 5, **characterized in that**, in the region of the hemispherical shell (28), the supporting body (30) has an annular web (70) which holds the supporting sleeve (40) in the region of the spherical segment ring (38).

10. Cylinder according to one of Claims 1 to 9, **characterized in that** the supporting body (30) and the supporting sleeve (40) form a supporting structure for the piston skirt sleeve (36).

11. Cylinder according to one of Claims 1 to 10, **characterized in that** the piston skirt sleeve (36) is formed as a thin-walled deep-drawn part from a metallic material.

## Revendications

1. Cylindre (2) en particulier cylindre-capteur pour des systèmes d'accouplement ou de freinage actionnés hydrauliquement sur des véhicules, comprenant
- un piston (6) disposé dans un boîtier (4),
- qui est coulissant axialement au moyen d'une tige de piston (8),
- la tige de piston (8) présentant une tête sphérique (12) qui est entourée au moins par endroits par des éléments de soutien (30, 40) en forme de cuvette et formant un coussinet sphérique et est logée dans ces éléments, de sorte que le piston (6) et la tige de piston (8) sont reliés entre eux sensiblement sans jeu mais pouvant basculer l'un par rapport à l'autre et les éléments de soutien (30, 40) sont disposés au moins partiellement à l'intérieur d'une douille de tige de piston (36), sur laquelle ces éléments peuvent s'appuyer contre une force mise en oeuvre par la tige de piston (8),
un premier élément de soutien (30) présentant une coque hémisphérique (28) et entourant donc un demi-côté de la tête sphérique (12) et l'autre côté de la tête sphérique (12) étant entouré à l'exception d'un jeu de basculement par un second élément de soutien (40) présentant une bague à segment sphérique (38), par l'orifice (50) duquel la tige de piston (8) est guidée,
**caractérisé en ce qu'**un élément de retenue (62, 70) est attribué à la bague à segment sphérique (38),
lequel élément peut recevoir une force radiale dans le cas d'une contrainte de traction de la tige de piston (8) et supprime une transmission de cette force à la douille de la tige de piston (36) et l'élément de retenue (62, 70), les éléments de soutien (30, 40) et la tige de piston (8) pouvant être prémontés comme unité avant l'insertion dans la douille de tige de piston (36).

2. Cylindre selon la revendication 1, la douille de tige de piston (36) présentant un fond de piston (32) ,
**caractérisé en ce que** le premier élément de soutien (30) s'appuie axialement sur le fond de piston (32).

3. Cylindre selon la revendication 1 ou 2,
**caractérisé en ce que** la bague à segment sphérique (38) est conçue sur une douille de support (40).

4. Cylindre selon l'une quelconque des revendications 1 à 3,
**caractérisé en ce que** la douille de support (40) est bloquée axialement dans une zone d'extrémité (42) de la douille de tige de piston (36) par une liaison à encliquetage (44) ou une collerette réalisée sur la douille de tige de piston (36).

5. Cylindre selon l'une quelconque des revendications 3 ou 4,
**caractérisé en ce que** la douille de support (40) présente une surface d'appui (52) pour la tige de piston (8).

6. Cylindre selon l'une quelconque des revendications 3 à 5,
**caractérisé en ce que** la douille de support (40) présente dans la zone de la bague à segment sphérique (38) au moins une fente axiale (68) et cette zone est entourée au moins partiellement par un élément de retenue conçu comme une bague de retenue (62).

7. Cylindre selon la revendication 6,
**caractérisé en ce que** les zones se faisant face du corps de soutien (30) et de la douille de support (40) sont entourées par une bague de retenue (62) commune.

8. Cylindre selon la revendication 6 ou 7,
**caractérisé en ce qu'**une liaison par encliquetage (63a, 63b) est conçue entre la bague de retenue (62) et le corps de soutien (30) et/ou la bague de retenue (62) et la douille de support (40).

9. Cylindre selon l'une quelconque des revendications 3 à 5,
**caractérisé en ce que** le corps de soutien (30) présente dans la zone de la coque hémisphérique (28) une nervure annulaire (70) qui reçoit la douille de support (40) dans la zone de la bague à segment sphérique (38).

10. Cylindre selon l'une quelconque des revendications 1 à 9,
**caractérisé en ce que** le corps de soutien (30) et la douille de support (40) forment une ossature de support pour la douille de tige de piston (36).

11. Cylindre selon l'une quelconque des revendications 1 à 10,
**caractérisé en ce que** la douille de tige de piston (36) est formée comme une pièce emboutie profonde à paroi mince à base d'un matériau métallique.
